# EUROPEAN PATENT SPECIFICATION

(11) **EP 0 401 296 B1**
(45) Date of publication and mention of the grant of the patent: **01.04.1998**
(21) Application number: 89903622.2
(22) Date of filing: 31.01.1989
(51) Int. Cl.: C08F 8/18, C08L 77/00

(54) **RIGID-ROD POLYMERS**
POLYMERE AUS STEIFEN STÄBEN
POLYMERES A TIGES RIGIDES

(30) Priority: 17.02.1988 US 157451
(43) Date of publication of application: 12.12.1990
(73) Proprietor: MAXDEM INCORPORATED, Pasadena California 91105 (US)
(72) Inventor: MARROCCO, Matthew, L., III, Santa Ana, CA 93706 (US); GAGNE, Robert, R., Pasadena, CA 91107 (US)
(74) Representative: Griffin, Kenneth David
(86) International application number: US8900391
(87) International publication number: WO8907617

(56) References cited:
- US-A- 4 229 566
- US-A- 4 503 248
- US-A- 4 614 784
- US-A- 4 628 125
- Journal of Polymer Science: Polymer Chemistry edition, volume 19, issued 1981, M.B. Jones et al, "Polymerization of aromatic nucle. XXVI, Poly (P-Phenylene)", see pages 89 to 101.
- Macromolecules, volume 18, no. 12, issued 1985, Sutherlin and Stille, "Rigid-rod polyquinolines with pendant aryl groups", see pages 267 to 2675.

## Description

### Field of the Invention

This invention relates to soluble rigid-rod polymers having rigid-rod backbones and pendant, flexible, solubilizing organic groups attached to the backbone. The polymers can be used as self-reinforced engineering plastics. The rigid-rod polymers can be utilized for the preparation of high tensile strength molecular composites of rigid-rod polymers and flexible coiled polymer binders. They can be used as matrix resins for fiber-containing composites.

### Background of the Invention

High-performance fiber-polymer composites are rapidly achieving a prominent role in the design and construction of military and commercial aircraft, sports and industrial equipment, and automotive components. Composites fill the need for stiffness, strength, and low weight that cannot be met by other materials. The most widely utilized high-performance fiber-polymer composites are composed of oriented carbon (graphite) fibers embedded in a suitable polymer matrix. To contribute reasonable strength and stiffness to the composite, the fibers must have an aspect ratio (length to width) of at least 25. Fabricating fiber-containing composites requires significant manual labor. Fiber-polymer composites cannot be recycled, and it is difficult to repair defective and/or damaged composite materials.

Molecular composites offer the prospect of being high-performance materials which are much more economical and easier to process than the conventional fiber-polymer composite. In addition, molecular composites can be recyclable and will be repairable. Molecular composites are composed of polymeric materials only. They contain no fiber material. Thus, molecular composites can be fabricated much more simply than fiber-polymer compositions which contain macroscopic fibers.

Molecular composites are materials composed of a rigid-rod polymer embedded in a flexible polymer matrix. Molecular composites with the optimum mechanical proper; ties will contain a large fraction, at least 30 percent, of rigid-rod polymers, with the balance being polymeric binder. Molecular composites may contain either oriented or unoriented rigid-rod polymers.

A molecular composite requires that the rigid-rod polymer be effectively embedded in a flexible, possibly coil-like, matrix resin polymer. The flexible polymer serves to disperse the rigid-rod polymer, preventing bundling of the rigid-rod molecules. As in conventional fiber/resin composites, the flexible polymer in a molecular composite helps to distribute stress along the rigid-rod molecules via elastic deformation of the flexible polymer. Thus, the second, or matrix-resin, polymer must be sufficiently flexible to effectively surround the rigid-rod molecules while still being able to stretch upon stress. The flexible and rigid-rod polymers can also interact strongly via Van der Waals, hydrogen bonding, or ionic interactions. The advantages of molecular composites can only be realized with the use of rigid-rod polymers.

Two technical difficulties have limited molecular composites to laboratory curiosities. Firstly, the prior art on molecular composites calls for merely blending or mixing a rigid-rod polymer with a flexible polymer. It is well known in the art that, in general, polymers of differing types do not mix. That is, homogeneous blends cannot be obtained. This rule also applies to rigid-rod polymers and the early molecular composites which could be made with only small weight fractions of a rigid-rod component. Increasing the fraction of the rigid-rod component will lead to phase separation, at which point a molecular composite can no longer be obtained.

Secondly, rigid-rod polymers of significant molecular weight are exceedingly difficult to prepare. The technical problem is exemplified by polyparaphenylene. During the polymerization of benzene, or other monomer leading to polyparaphenylene, the growing polymer chain becomes decreasingly soluble and precipitates from solution causing the polymerization to cease. This occurs after the chain has grown to a length of only six to ten monomer units. These oligomers, i.e., rigid-rod polymers, are too short to contribute to the strength of a composite. The lack of solubility is a general property of rigid-rod polymers, hence polymerization is difficult.

An article in the Journal of Polymer Science: Polymer Chemistry Edition, Vol. 19, 89-101 (1981) discusses the alkylation of polyparaphenylene and reports on the synthesis and determination of a polymer with a backbone of 15 aromatic units.

The solubility problem may be avoided in the special case in which the product polymer contains basic groups which can be protonated in strong acid and the polymerization can be conducted in strong acid. For example, polyquinoline can be prepared in the acidic solvent dicresol-hydrogenphosphate, because the quinoline group interacts with the acidic solvent, preventing precipitation. The resulting polymers are soluble only in strong acids, making further processing difficult.

An article in Macromolecules 1985, 18, 2669-2675 reports on experiments to enhance the solubility of rigid-rod polyquinolines with extended aryl ether pendant groups in common organic solvents, and concludes that solubility is not enhanced but is similar to the analogous rigid-rod polymer containing shorter pendant phenyl groups.

Before molecular composites can become a practical reality, the problems of (a) blending the rigid-rod and flexible components into a stable homogeneous phase, and (b) the low solubility of the polymer, must be overcome.

According to the present invention there is provided a polymer comprising a backbone of at least 25 monomer units comprising:
(a) a plurality of paraphenylene monomer units joined together by carbon-carbon covalent bonds wherein at least about 95% of the bonds are substantially parallel, the polymer and its monomer starting materials being soluble in a common solvent system; and
(b) a plurality of solubilizing organic groups pendant from the monomers, the number and size of the solubilizing organic groups being sufficient to render the polymer soluble in the polymerization solvent system.

Rigid-rod polymers are polymers having a rigid-rod backbone formed from a plurality of monomer units joined together by covalent bonds, such as carbon-carbon covalent bonds. At least 95% of the covalent bonds bonding or connecting the monomer units will be parallel, that is, the longitudinal axis of all the covalent bonds between the monomer units will be substantially parallel, thus resulting in a polymer backbone that is linear and substantially straight. The rigid-rod polymers of the present invention are unique in that they are soluble in one or more organic solvent(s). The polymer and the monomers are soluble in a common solvent system so that the polymer will remain in a dissolved state in the polymerization solvent system. The rigid-rod polymers of the present invention are made soluble by pendant solubilizing organic groups which are attached to the backbone, that is, to the monomer units. The organic groups are flexible groups, to impart increased solubility and meltability to the polymer. The organic groups will also be the functional equivalent of the coil-like matrix component of a molecular composite. Thus, the rigid-rod polymers of the present invention have incorporated rod-like and coil-like components to a single molecular species.

Rigid-rod polymers are in general highly insoluble (except in the special case of polymers with basic groups which may be dissolved in strong acid) and infusible. These properties make them difficult, and often impossible, to prepare and process. We have found, surprisingly, that the incorporation of appropriate side groups to the polymer substantially improves solubility and fusibility. Earlier work has suggested that side groups do not increase the solubility of rigid-rod polymers. However, by increasing the size of the side chain and by matching its properties (principally, polarity and dielectric constant) to the polymerization solvent, rigid-rod polymers of substantial molecular weight can be prepared. For example, when the polymerization is carried out in a polar solvent, such as dimethylformamide, the solubilizing organic groups will preferably be polar and will have high dielectric constants, such as dielectric constants greater than 5.

Further, if the side chains are flexible, the rigid-rod backbone/flexible side-chain polymer alone will behave as a molecular composite. Since the flexible component is chemically bound to the rigid component, phase separation is not possible. The structure of the rigid-rod backbone/flexible side-chain polymers of the present invention can be prepared in common solvents and can be processed with standard methods to give a stable, single-component, molecular composite useful for structural and other applications requiring high strength and modulus.

The rigid-rod polymers of the present invention are the primary source of the tensile strength and modulus of molecular composites. Preferably, when employed as a self-reinforcing plastic, the rigid-rod polymer will have an aspect ratio of at least 100, that is, the backbone of the polymers will have a length of at least 100 times greater than the width of the backbone. For other uses, the rigid-rod polymer can have an aspect ratio of 25 or more. Preferably, the aspect ratio of the polymer will be far greater than 100. The polymer backbone will be substantially linear, with no flexibility that could result in nonlinearity. Accordingly, the polymers should be made employing processes which are not prone to the formation of occasional kinks or other imperfections interfering with the linearity of the backbone. Nonetheless, almost all chemical reactions have side reactions, and, accordingly, some nonparallel covalent bonds between the monomer units will result during the formation. However, the rigid-rod polymers will have at least 95% parallel covalent bonds.

The polymers of the present invention comprise a rigid-rod backbone comprising at least about 25 monomer units, preferably at least about 100 monomer units, joined together by covalent bonds, such as carbon-carbon or carbon-nitrogen covalent bonds, wherein at least about 95% of the bonds are substantially parallel, the polymer and its monomers being soluble in a common solvent system. Organic groups having an average molecular weight of at least 300 can be attached to the rigid-rod backbone, that is, to some of the monomer units of the backbone. The polymer can be a copolymer of two or more monomers.

By the term "monomer unit" it is meant the basic, organic, structural units of the polymer rigid-rod backbone chain, such as phenylene groups, aromatic groups, and/or heterocyclic groups, including any attached side chain, ie. organic groups.

By the term "monomers", for the purpose of the present invention, it is meant the immediate chemical precursors to the polymer. Because most of the polymerization reactions described herein are condensation polymerizations, a monomer will typically lose one or more functional group(s) with respect to the corresponding monomer unit. For example, the monomer dichlorobenzene (C₆H₄Cl₂) polymerizes to a polymer with phenylene (C₆H₄) monomer units.

A monomer may have an attached side chain which is itself a polymer. For the purpose of the present invention, such a monomer will be written as any other monomer with a side group; for example, 2-(polyorgano)-1,4-dichlorobenzene or 2-(poly-2,6-dimethylphenylene oxide) terephthalic acid. The corresponding monomer units would be 2-(polyorgano)-1,4-phenylene and 2-(poly-2,6-dimethylphenylene oxide)-1,4-phenylene. An alternate nomenclature would treat the monomers as end-capped polymers; for example, terephthalic acid-terminated poly-2,6-dimethylphenylene oxide. The latter nomenclature will not be used herein.

In one embodiment of the invention, the rigid-rod polymer is a homopolymer; the same organic or pendant group(s) occur(s) on each monomer unit. The side chains are chosen to enhance solubility, especially in the polymerization solvent system. For example, polar groups, such as N,N-dimethylamido groups, will enhance solubility in polar solvents. Less polar side groups, such as ethers, aryl and alkyl groups, are used in less polar solvents. The organic groups should be of sufficient size to affect solubility, eg. greater than about 300 molecular weight.

In a second embodiment of the invention, the polymer is a copolymer of two or more monomer unit types, and the majority of the monomer units will be unsubstituted or substituted with organic groups having molecular weights of less than 300. However, at least one out of every 100 monomer units will have a pendant solubilizing organic group having a molecular weight of at least 300 ("solubilizing organic group" herein).

In a third embodiment of the invention, the rigid-rod polymer is a copolymer having two or more monomer unit types. The side chains, ie. organic groups, are chosen to enhance solubility, as discussed above.

As stated above, the polymer can be formed from two different monomer units or monomers, three different monomer units or monomers, four different monomer units or monomers, and the like.

At least one out of every 100 monomer units in the rigid-rod backbone has solubilizing organic groups attached to the monomer units. Preferably, more than one out of every 100 monomer units or monomers have solubilizing organic groups. The molecular weight fraction of the side chains, ie. solubilizing organic groups, to the whole polymer can be from about 30% to about 95%, preferably from about 30% to about 60%, and most preferably from about 45% to about 55%. By "molecular-weight fraction" it is meant the percentage of the solubilizing organic groups' molecular weight to the total molecular weight of the rigid-rod polymer (ie., molecular weight of monomer units and organic groups). Thus, for example, if the total weight of the polymer is 1,000,000, and the molecular weight total of the solubilizing organic groups is 500,000, the molecular-weight fraction of the solubilizing organic groups is 50% (500,000/1,000,000) x 100.

There does not appear to be a universally recognized nomenclature scheme for many of the monomeric units of the present invention. For example, 1,4-phenylene (see Formula IA) is sometimes named benzene-1,4-didehydro; 1,10-anthracenyl (see Formula XVA) is sometimes named 1,10-anthrylene; and 1,5-naphthylene (see Formula XIIIA) is sometimes named 1,5-naphthenylene. Accordingly, the monomeric units have been named in accordance with the nomenclature used in current literature.

The soluble rigid-rod polymers of the present invention can be made from virtually any organic monomer or monomers that can bond via parallel covalent bonds. Preferably, the soluble rigid-rod polymers of the present invention comprise a rigid-rod backbone comprising one or more of the following monomer units; paraphenyl, parabiphenyl, paraterphenyl, 2,6-naphthylene, 1,4-naphthylene, 1,5-naphthylene, 1,4-anthracenyl, 1,10-anthracenyl, 1,5-anthracenyl, 2,6-anthracenyl, and 9,10-anthracenyl. However, the rigid-rod polymers of the present invention can also be made from other monomer units, in addition to those named above. The polymer will be at least 25 monomer units in length, and, most preferably, longer than 100 monomer units. The polymer can be a homopolymer of a single monomer or a copolymer of two or more difference monomers or monomer units.

The rigid-rod polymers of the present invention preferably comprise a backbone having an average molecular weight of at least 7,600.

The rigid-rod polymer of the present invention preferably has an average molecular weight of at least 10,850.

The rigid-rod polymers of the present invention can have at least one monomer unit for each 100 monomer units in the rigid-rod backbone substituted with a solubilizing organic group having an average molecular weight of at least 300, that is, the average molecular weight of the solubilizing organic groups will be at least 300. Preferably, the polymer will have more than one monomer unit per 100 monomer units substituted with solubilizing organic groups. The solubilizing organic groups which are substituted on, attached to, or pendant to, the monomer units are long-chain organic molecules that have solubility in one or more organic solvent system(s). Solubilizing organic groups which can be used include alkyl groups, aryl groups, alkaryl groups, aralkyl groups, alkyl or aryl amide groups, alkoxy groups, polyalkeneoxy groups, polyphenylene oxide groups, polyphenylene sulfide groups, polystyrene groups, polyvinyl chloride groups, polyalkylmethacrylate groups, polyacrylonitrile groups, polyalkylvinyl ether groups, polyvinyl alcohol groups, polyvinyl acetate groups, perfluoroalkyl groups, perfluoroalkoxy groups, polyester groups, polyimide groups, polyamide groups, and poly (phenoxyphenyl ketone) groups. Other long-chain organic groups having an average molecular weight of no less than 300 can also be used as solubilizing organic groups.

The monomer units of the rigid-rod copolymers can also have pendant organic groups having an average molecular weight of less than 300. Such organic groups include alkyl groups, aryl groups, alkaryl groups, aralkyl groups, alkyl or aryl amide groups, alkoxy groups, polyalkeneoxy groups, polyphenylene oxide groups, polyphenylene sulfide groups, polyviny chloride groups, polyalkylmethacrylate groups, polyacrylonitrile groups, polyalkyl vinyl ether groups, polyvinyl alcohol groups, polyvinyl acetate groups, perfluoroalkyl groups, perfluoroalkoxy groups, polyester groups, polyamide groups, polyimide groups, and poly-(phenoxyphenyl ketone) groups.

The rigid-rod polymers of the present invention are linear polymers with parallel covalent bonds between the monomer units. The monomer units are not necessarily in a straight line. In some polymers, the majority of monomer units will be in a straight line (see chain A below). In other polymers, the monomer units will be staggered in a stair-like fashion (see chain B below) or in a crankshaft-like fashion (see chain C below). The monomer units can rotate about the linear axis of the covalent bonds between the monomers. However, the monomer units are restricted from flexing with respect to the bond, thus forming a rigid-rod polymer. Although the covalent bonds between the monomer units do not necessarily line up in a straight line, the bonds are parallel to yield a substantially linear rigid-rod polymer.

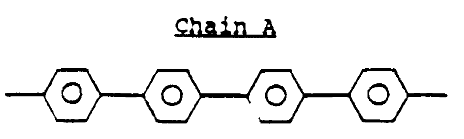

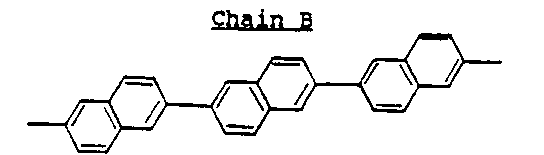

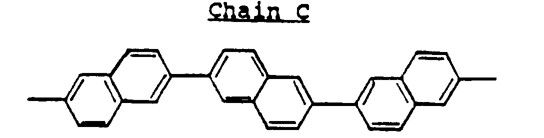

In one embodiment of the present invention, the rigid-rod polymers of the present invention will have at least one of the Group A monomer units, i.e., the monomer units of Formula IA, IIA, IIIA, VIA, VIIA, VIIIA, XIIA, XIIIA, XIVA, XVA, or XVIA below. In another embodiment of the present invention, the rigid-rod polymers will have at least one of the Group A monomer units and at least one of the Group B monomer units of Formula IB, IIB, IIIB, VIB, VIIB, VIIIB, XIIB, XIIIB, XIVB, XVB; or XVIB below: 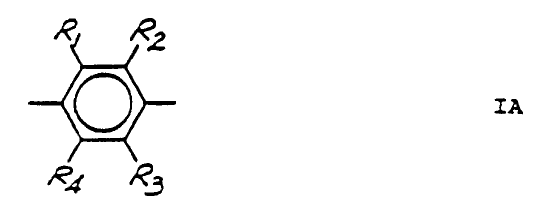 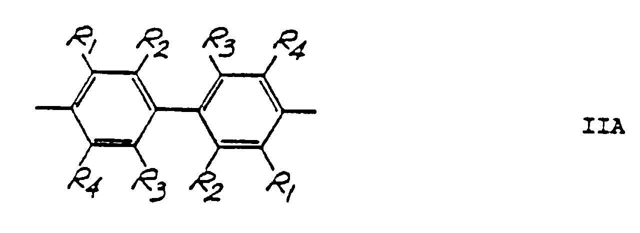 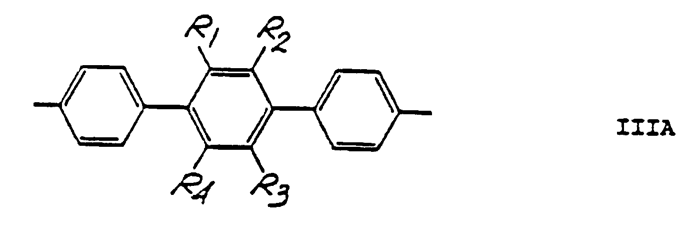 wherein R₁, R₂, R₃, and R₄ can be the same or different and are hydrogen, alkyl, aryl, alkaryl, aralkyl, alkyl or aryl amide, alkoxy, polyalkeneoxy, polyphenylene oxide, polyphenylene sulfide, polyvinyl chloride, polyalkylmethacrylate, polyacrylonitrile, polyalkylvinyl ether, polyvinyl alcohol, polyvinyl acetate, perfluoroalkyl, perfluoroalkoxy, polyester, polyamide, polyimide, and poly(phenoxyphenyl ketone), provided that at least one of R₁, R₂, R₃, and R₄ is other than hydrogen, and provided that the molecular weight of at least one of R₁, R₂, R₃, and R₄ is at least 300 and 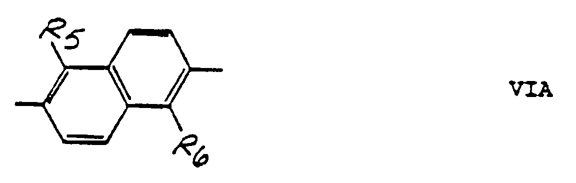 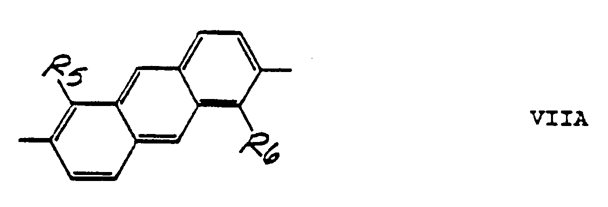 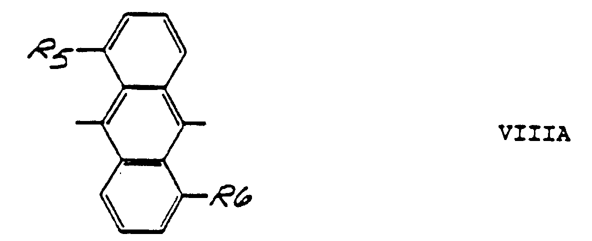 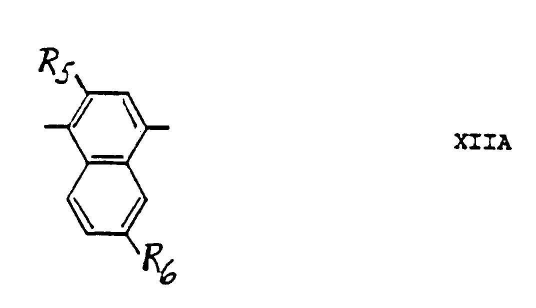 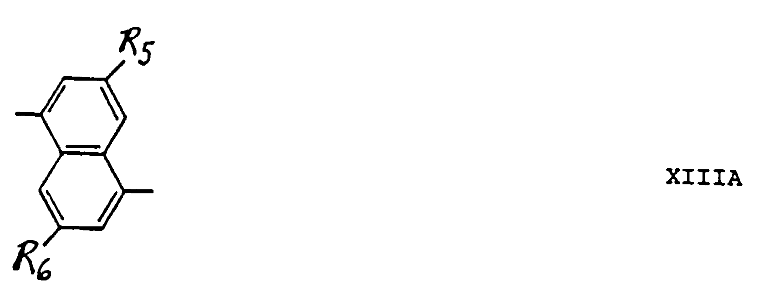 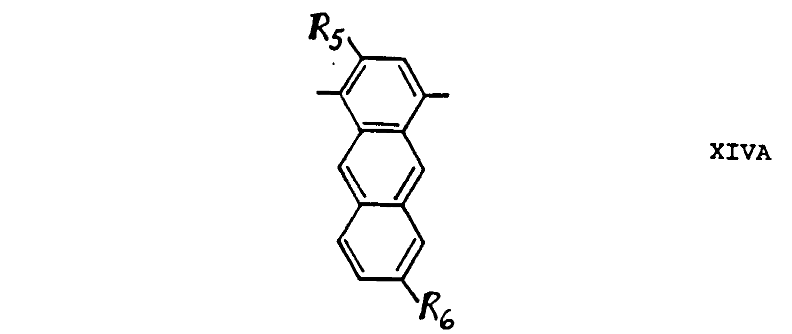 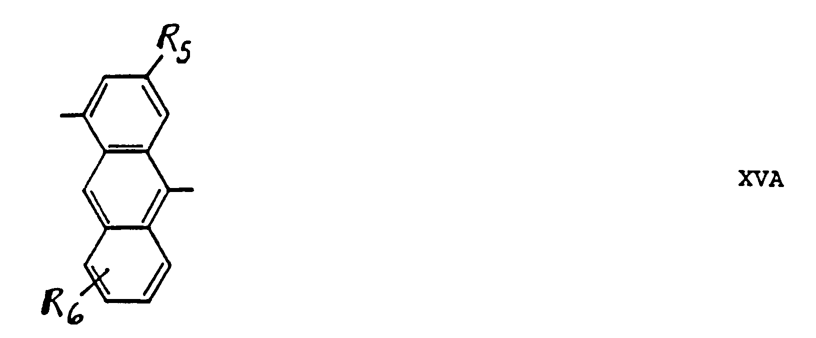 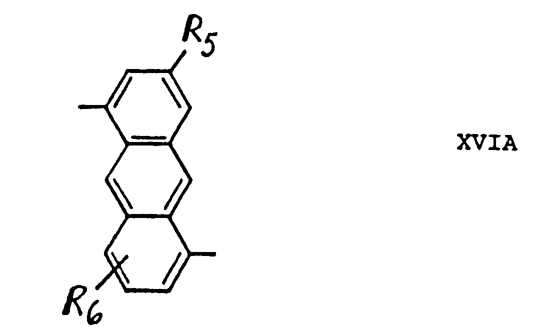 wherein R₅ and R₆ can be the same or different and are hydrogen, alkyl, aryl, alkaryl, aralkyl, alkyl or aryl amide, alkoxy, polyalkeneoxy, polyphenylene oxide, polyphenylene sulfide, polyvinyl chloride, polyalkylmethacrylate, polyacrylonitrile, polyalkylvinyl ether, polyvinyl alcohol, polyvinyl acetate, perfluoroalkyl, perfluoroalkoxy, polypolyester, polyamide, polyimide, and poly(phenoxyphenyl ketone), provided that at least one of R₅ and R₆ is other than hydrogen, and provided that the molecular weight of at least one of R₅ and R₆ is at least 300. 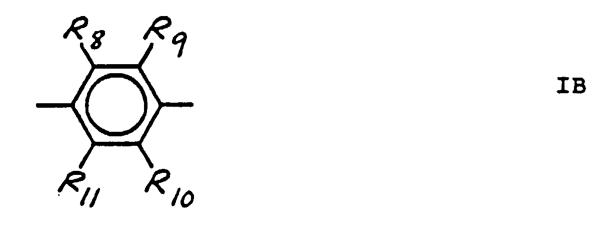 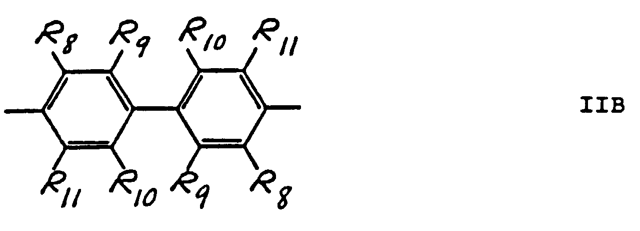 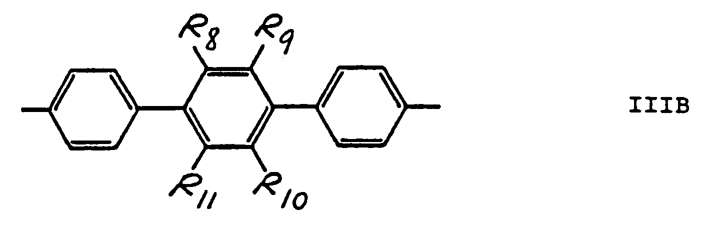 wherein R₈, R₉, R₁₀, and R₁₁ can be the same or different and are hydrogen, alkyl, aryl, alkaryl, aralkyl, alkyl or aryl amide, alkoxy, polyalkeneoxy, polyphenylene oxide, polyphenylene sulfide, polyvinyl chloride, polyalkylmethacrylate, polyacrylonitrile, polyalkylvinyl ether, polyvinyl alcohol, polyvinyl acetate, perfluoroalkyl, perfluoroalkoxy, polyester, polyamide, polyimide, and poly(phenoxyphenyl ketone), and provided that the molecular weight of each of R₈, R₉, R₁₀, and R₁₁ is no greater than 300 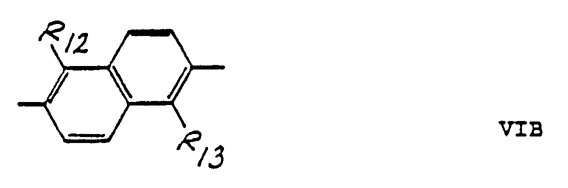 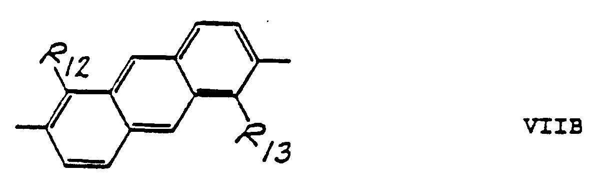 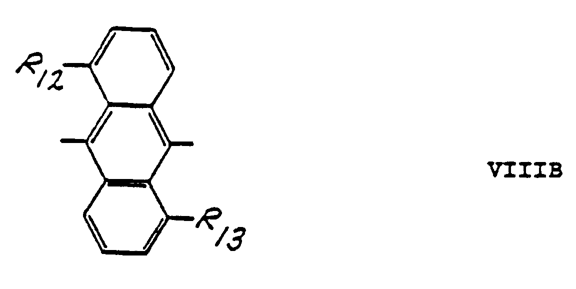 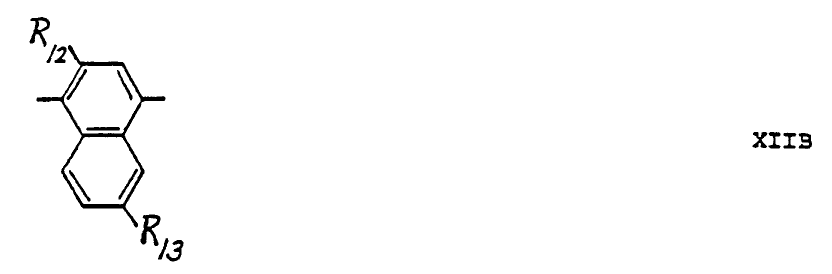 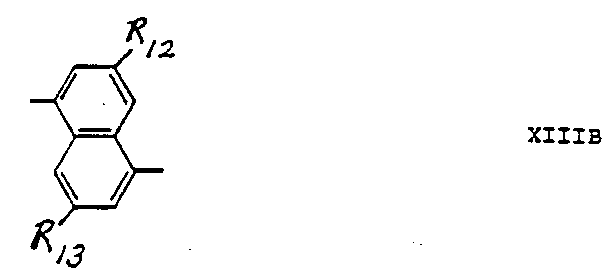 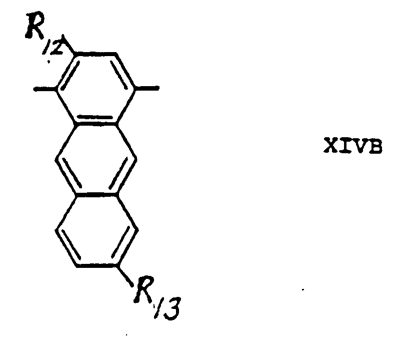 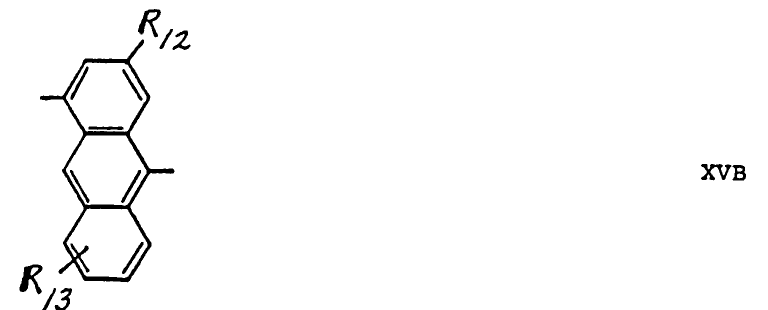 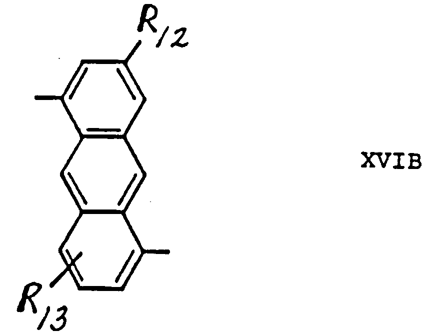 wherein R₁₂ and R₁₃ can be the same or different and are hydrogen, alkyl, aryl, alkaryl, aralkyl, alkyl or aryl amide, alkoxy, polyalkeneoxy, polyphenylene oxide, polyphenylene sulfide, polyvinyl chloride, polyalkylmethacrylate, polyacrylonitrile, polyvinyl alcohol, polyvinyl acetate, perfluoroalkyl, perfluoroalkoxy, polyester, poly(phenoxyphenyl ketone), polyamide, and polyimide, provided that each of R₁₂ and R₁₃ has a molecular weight of less than 300.

If the rigid-rod polymer is a homopolymer, the polymer is formed from a monomer unit of Group A above.

The alkyl groups can have one or more carbon atoms and can be straight-chained or branch-chained alkyls or polycycloalkyls, such as C₂₂ alkyls (i.e., alkyls of at least 22 carbon atoms), C₇₂ alkyls, C₁₀₀ alkyls, C₁₆₃ alkyls, and the like. The aryl organic groups can be monoaryls or polyaryls, such as phenyl, naphthyl, anthracyl, polyphenylene, and polyanthracenylene. The alkaryls are aromatic groups substituted with one or more alkyl groups, preferably polyaryl substituted with alkyl groups, such as poly(methyl)phenylene, poly(dibutylnaphthalene), poly(tri-tetracontylanthryl), poly(dioctyl)phenylene, poly(pentadecyl) naphthylene, poly(hentriacontyl)anthracenylene, and the like. Aralkyl organic groups are alkyl groups substituted with one or more aryl groups such as phenyloctyl, dinaphthyltriacontyl, and the like. Alkyl and aryl amide organic groups are alkyl groups (described above) or aryl groups (described above) connected to the monomer unit through an amide linkage. Alkoxy organic groups are alkyl groups (described above) connected to the monomer unit through an oxygen-ether linkage, such as hexadecyloxy.

Polyalkyleneoxy organic groups are homopolymers and copolymers of alkylene oxides, such as ethylene oxide, propylene oxide, butylene oxide, octadecylene oxide, and the like, joined to the monomer unit by an ether linkage. Polyphenylene oxide organic groups are polymers containing two or more phenylene groups joined to each other through an ether linkage, and the polymer, in turn, is attached to the monomer unit by an ether linkage. Polyphenylene sulfide is a polymer having two or more phenylene groups, each phenylene group being connected to adjacent phenylene groups by thioether linkage, and the polymer, in turn, is attached to the monomer unit by thioether linkage. The polyvinyl chloride organic group is a polymer containing two or more vinyl chloride monomer units. The polymer molecular weight can be from 124 to over several million.

The polyalkylmethacrylate organic group is a polymer of alkylmethacrylates, such as methylmethacrylate. These polymers can have molecular weights from about 200 up to several million. The polyacrylonitrile organic group is a polymer of two or more acrylonitrile monomers. These polymers have molecular weights from about 100 to several million. The polyvinyl alcohol organic group is a polymer having one or more vinyl alcohol monomer(s). This polymer can have molecular weights of from about 100 up to several million. The polyvinyl acetate organic group is a polymer formed from one or more vinyl acetate monomer(s) and can have a molecular weight of from about 150 to several million. Perfluoroalkyl organic groups are alkyl organic groups (described above) wherein all of the hydrogen atoms have been replaced by fluorine. The perfluoroalkoxy organic group is an alkoxy organic group (described above) wherein all of the hydrogen atoms have been substituted with fluorine atoms. The polyester groups are alkyl or aryl polymers having the monomer units connected by ester linkages; these groups can have a molecular weight of from about 100 to several million. The polyamide organic groups are alkyl or aryl polymers having the monomer units connected by amide linkages. The molecular weight of these groups can be from about 150 to several million. The polyimide organic groups are polymers having the monomer units connected by imide linkages and can have a molecular weight of from about 200 to several million. Poly(phenoxyphenyl ketone) organic groups are comprised of phenylene oxide and benzoyl units, as, for example polyetheretherketone (PEEK): 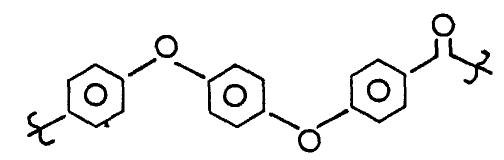 and polyetherketone (PEK): 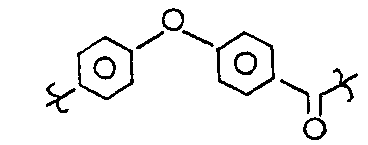 The poly-(phenoxyphenylketone) organic group is connected to the monomer unit of the rigid-rod backbone either by a carbonyl group or an ether linkage. For the rigid-rod copolymers of the present invention, at least one out of every 100 monomer units will be a Group A monomer unit.

The molecular-weight fraction of the solubilizing organic groups R₁ through R₁₁ of the polymer will be between about 30% and about 95%, preferably between about 30% and about 60%, and most preferably between about 45% and about 55% of the whole polymer (backbone and organic groups).

Polymers of the present invention containing the monomer units of Formula IA, IIA, IIIA, VIA, VIIA, VIIIA, XIIA, XIIIA, XIVA, XVA, or XVIA can be prepared from the corresponding dihalo monomer starting material of Formula IC, IIC, IIIC, VIC, VIIC, VIIIC, XIIC, XIIIC, XIVC, XVC, or XVIC below, respectively, wherein R₁, R₂, R₃, R₄, R₅, and R₆ are as defined above, and W is Cl, Br, or I. Similarly, the copolymers of the present invention that contain monomer units of Formula IB, IIB, IIIB, VIB, VIIB, VIIIB, XIIB, XIIIB, XIVB, XVB, or XVIB can be prepared from the corresponding monomer starting material of Formula ID, IID, IIID, VID, VIID, VIIID, XIID, XIIID, XIVD, XVD, or XVID below, respectively, wherein R₈, R₉, R₁₀, R₁₁, R₁₂, and R₁₃ are as defined above, and W is Cl, Br, or I.

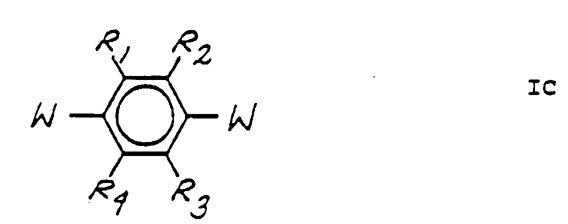

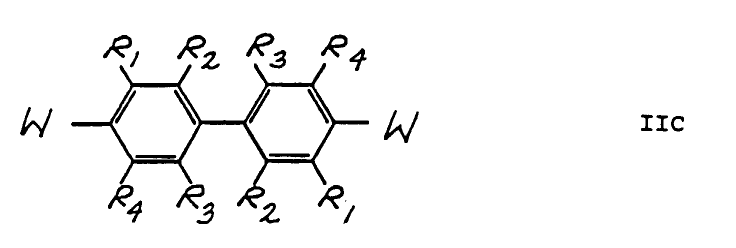

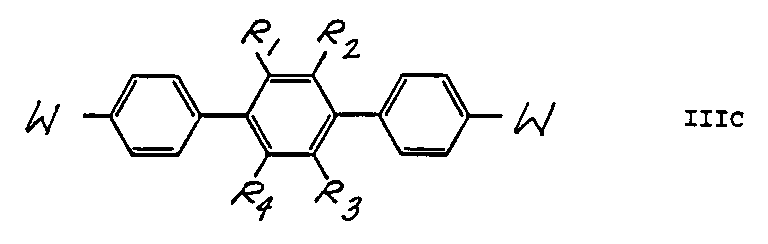

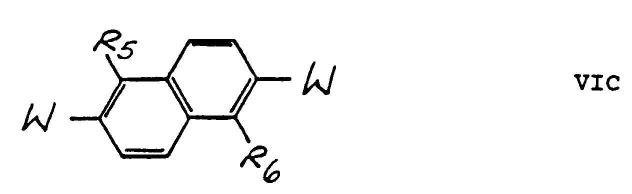

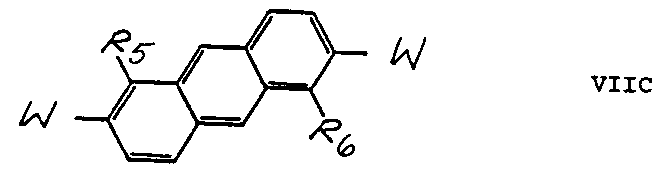

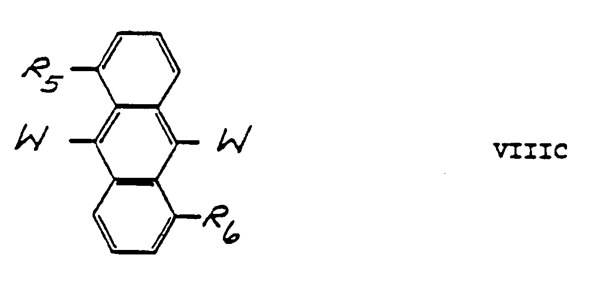

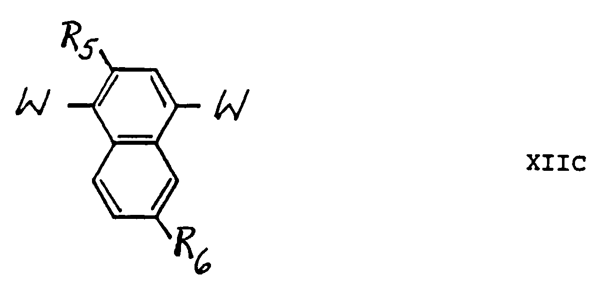

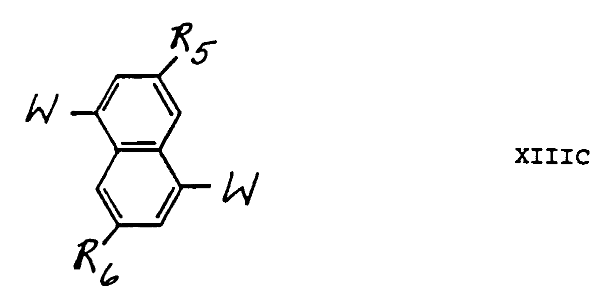

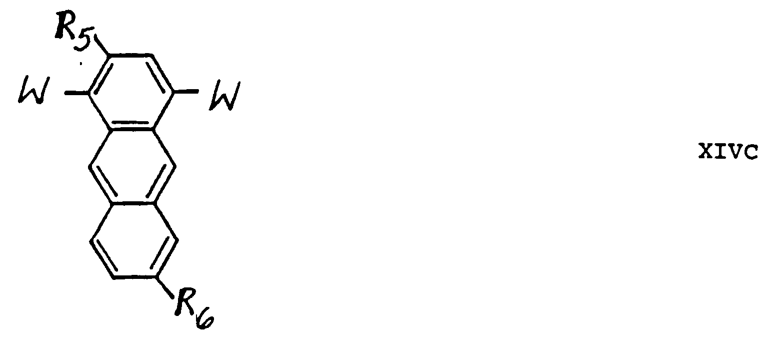

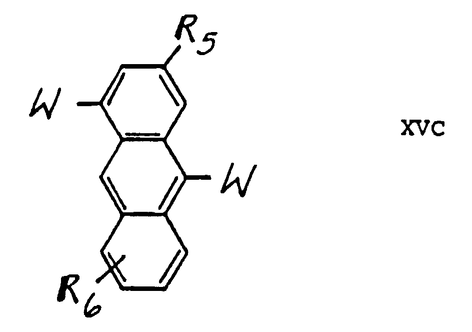

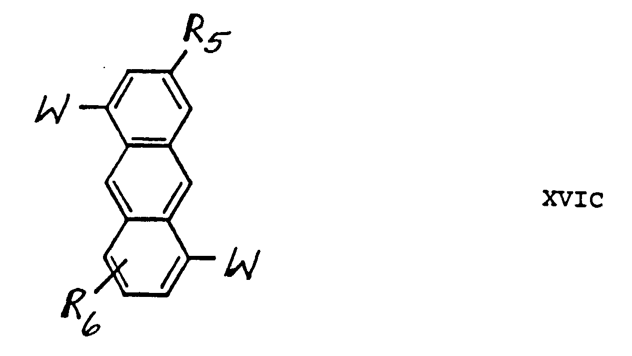

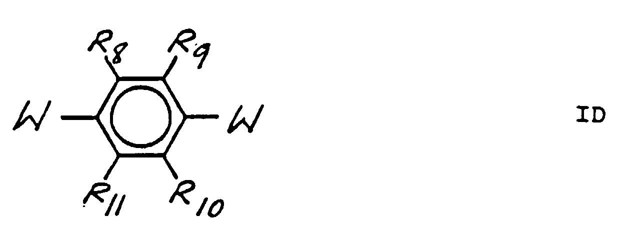

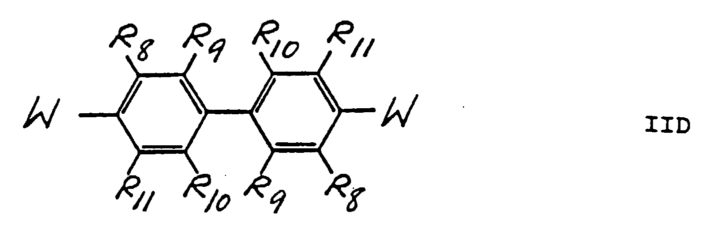

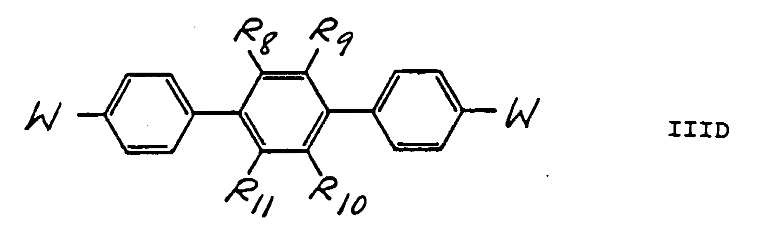

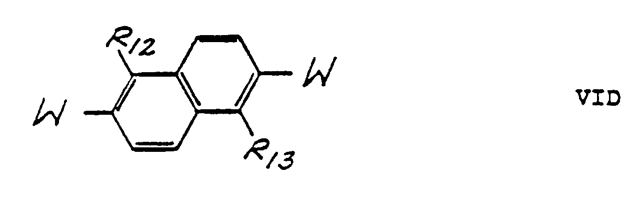

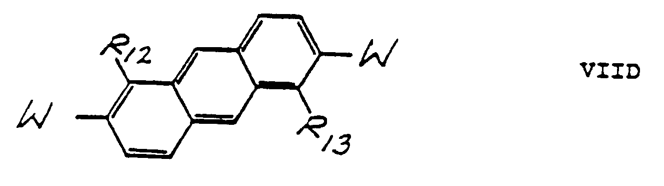

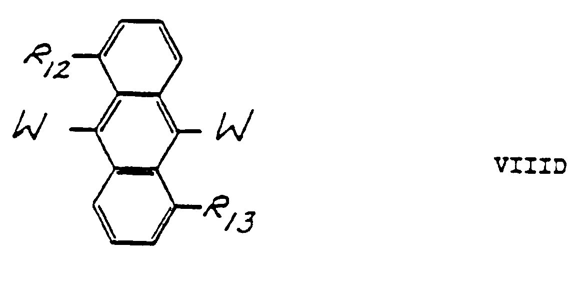

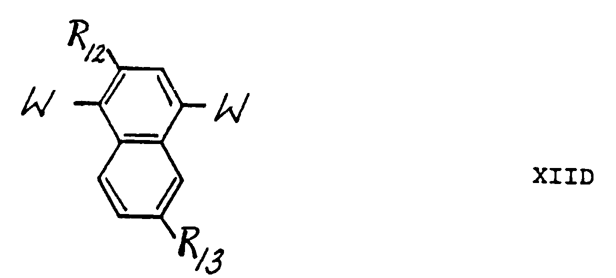

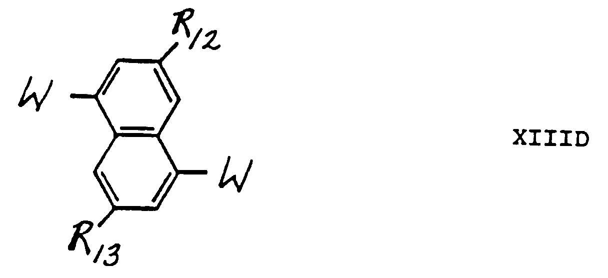

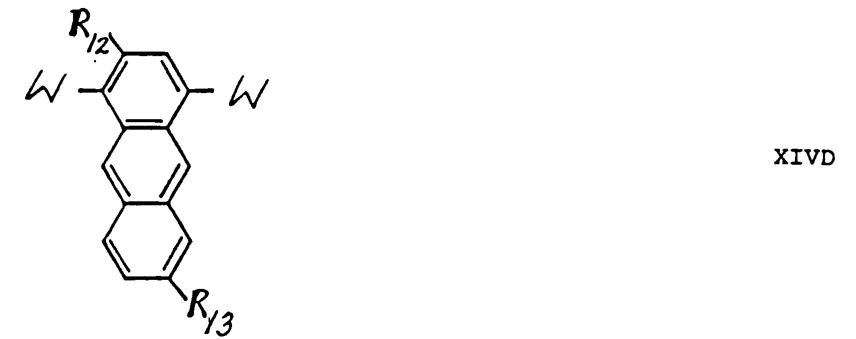

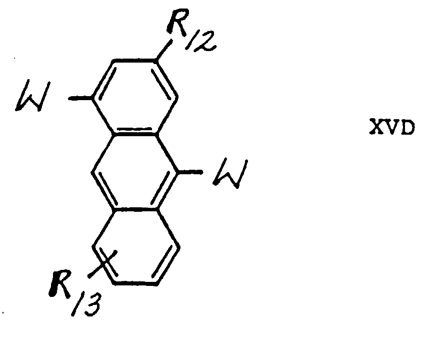

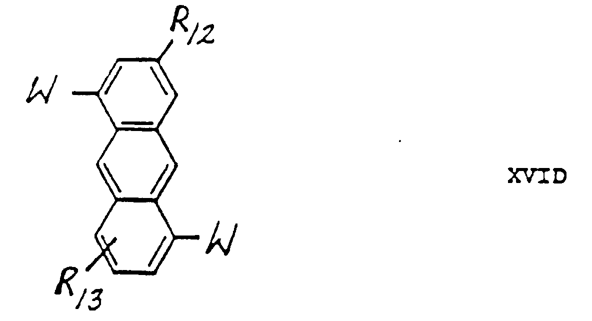

The first and third rings of the terphenyl monomer units or monomers of Formulae IIIA, IIIB, IIIC, and IIID are not substituted with solubilizing organic groups (R₁, R₂, R₃, and R₄) or organic groups (R₈, R₉, R₁₀, and R₁₁). However, the first and third rings of the terphenyl monomer unit or monomer can be substituted with solubilizing organic groups or organic groups in the same manner as the second (middle) ring of the terphenyl monomer unit or monomer.

The monomer units of Formulae VIA, VIIA, VIIIA, XIIA, XIIIA, XIVA, XVA, XVIA, VIB, VIIB, VIIIB, XIIB, XIIIB, XIVB, XVB, and VIB, and the monomer of VIC, VIIC, VIIIC, XIIC, XIIIC, XIVC, XVC, XVIC, VID, VIID, VIIID, XIID, XIIID, XIVD, XVD, or XVID are shown substituted with two solubilizing organic groups (R₅ and R₆) or organic groups (R₁₂ and R₁₃). However, these groups can be substituted with more than two solubilizing organic groups or organic groups or example, the naphthyl group can be substituted with up to six groups (groups R₅ and R₆ or R₁₂ and R₁₃), and the anthracenyl group can be substituted with up to eight groups.

The rigid-rod polymers of the present invention are made in accordance with well-known chemical polymerization and addition reactions. Processes for preparing polyparaphenylenes are described in T. Yamamoto et al, Bull. Chem. Soc. Jap., 51, 7, 2091 (1978) and M. Zembayashi et al, Tet. Lett., 47, 4089 (1977). The same processes can be used to prepare polyparadiphenylenes, polyparaterphenylenes, poly-2,6-naphthylenes, poly-2,7-anthracenes, poly-1,4-naphthylene, poly-1,5-naphthylene, poly-1,4-anthracenyl, poly-1,10-anthracenyl, poly-1,5-anthracenyl, and poly-9,10-anthracenes of the present invention.

The processes of preparation of the rigid-rod polymers of the present invention employ chemical polymerization addition reactions in solvent systems in which the rigid-rod polymers and the monomer starting materials are mutually soluble. Thus, if the rigid-rod polymers are to be synthesized in polar solvents, the pendant solubilizing organic groups of the polymer and the monomer starting material will be a group that is soluble in polar solvents. Similarly, if the rigid-rod polymers are to be synthesized in non-polar solvents, the pendant solubilizing organic group on the rigid-rod polymer and the monomer starting material will be a group that is soluble in non-polar solvents.

Paraphenylene polymers (made up of monomer units of Formula I) can be prepared by the coupling of Grinard reagents with paraphenyl dihalides catalyzed by transition metal complexes. Thus, a mixture of 4-bromo-phenylmagnesium bromide (1 mole) and 4-bromo-3-alkyl-phenylmagnesium bromide (0.01 mole), the alkyl group having an average chain length of about 24 carbon atoms, will react in an ether solvent in the presence of a transition metal complex to yield a polyparaphenylene rigid-rod polymer having about one monomer unit per 100 monomer units substituted with a long-chain alkyl group. The transition metal-catalyzed coupling reaction proceeds selectively and quantitatively under mild conditions. In another variant of the reaction, 1,4-dibromobenzene (1.0 mole) and a 1,4-dibromobenzene substituted with a long-chain alkoxy group (0.1 mole) can be coupled in the presence of magnesium metal and a transition metal catalyst in an inert solvent, such as ether, to produce a polyparaphenylene rigid-rod polymer having on the average about one monomer unit out of 10 monomer units substituted with a long-chain alkoxy group. A variety of dihalogenated benzenes (monomers of Formula IC), biphenyls (monomers of Formulae IIC and IID), terphenyls (monomers of Formulae IIIC and IIID), anthracenes (monomers of Formulae VIIC, VIIIC, VIID, and VIIID), and naphthalenes (monomers of Formulae VIC and VID), can be polymerized using these methods. The net reaction resembles the dehalogenation polymerization of dihaloaromatic compounds with copper and sodium. Dibromo-substituted compounds are the compounds of choice for the reaction; however, in many instances, the dichloro compound can also be used, if the reaction can be initiated. We have found that the NiCl₂ (2,2'-bipyridine) transition metal catalyst works satisfactorily for this reaction. Coupling of aryl halides can also be carried out with nickel or palladium catalysts with zinc. This approach has distinct advantages, since a wider variety of solvents can be employed, such as, N,N-dimethylforamide, hexamethylphosphoric, triamide, and benzene. This coupling reaction can also be used with monomers having specially reactive groups, such as nitrile and carbonyl groups. In addition, zinc is less expensive and easier to handle than magnesium.

Preferably, when the preparation of rigid-rod polymers is carried out by anodic polymerization, the monomer should be free of the following organic side groups: polyalkylmethacrylate, polyvinyl alcohol, polyvinyl acetate, and polyimide. When the rigid-rod polymers are prepared under Grinard conditions, the following types of organic groups may react with the Grinard reagents, causing undesirable side reactions: alkoxy, aryloxy, polyalkeneoxy, polyphenylene oxide, polyphenylene sulfide, perfluoroalkoxy, and phenoxyphenylperfluoroisopropylidene. Rigid-rod polymers prepared under Grinard conditions preferably do not contain the following organic groups which are not compatible with Grinard conditions: polyalkylmethacrylate, polyvinyl alcohol, polyvinyl acetate, and polyvinyl chloride. Rigid-rod polymers with such side chains can be prepared with the process described by I. Colon and D. Kelsey, J. Org. Chem., 51, 2627 (1986). If the I. Colon et al process is used, the side chains of the monomers are preferably free of acidic protons, such as polyvinyl alcohol. The polyvinyl alcohol side chain can be prepared from the corresponding polyvinyl acetate side chain by hydrolysis of the latter.

The choice of solvents for the various polymerization or condensation reactions will be somewhat dependent on the reaction type and the type of solubilizing organic groups appended to the monomers. For the condensation of aryl monomers employing Grinard reagents with transition metal catalysts, the solvents of choice are ethers, and the best solubilizing side chains are polyethers, such as polyethylene oxide, and long-chain alkyls. Anodic polymerization is done in acetonitrile-type solvents, and the aromatic side chains, such as polyphenylene and polystyrene, would be the favored side chains. Cathodic polymerizations can be done in dimethylforamide and N-methylpyrrolidone. More polar side chains, such as polyacrylates and polyvinylalcohols, would be advantageous in such solvent systems.

The monomer units are known or can be prepared by conventional chemical reactions from known starting materials. For example, the paradihalobenzene monomers substituted at the 2 position with an alkoxy group can be prepared from the corresponding 2,5-dihalophenol by allowing the phenol in the presence of sodium hydroxide and benzyltriethylammonium chloride to react with the corresponding 1-haloalkyl, such as 1-bromohexadecane.

Para-dibromo-terphenyl monomers, di-substituted with aryl or aryloxide groups on the middle phenyl group, can be prepared from the corresponding diphenyl, phenoxyphenyl, or polyphenoxyphenyl diketones. For example, a double Friedel-Crafts acylation of oxalyl chloride with diphenyl ether yields 4,4'-diphenoxybenzil. Treatment of this diketone with 1,3-di(para-bromophenyl)-2-propanone forms 2,5-di(para-bromophenyl)-3,4-diphenoxyphenyl tetracyclone. Finally, tetracyclone is treated with norbornadiene to give 4,4"-dibromo-2',3'-di(para-phenoxyphenyl) para-terphenyl. Alternatively, the final reaction can be carried out in the presence of acetylenes to include 5' and/or 6' substitutions on the terphenyls.

The para-dihalobenzenes substituted with oligomeric phenyleneoxide-solubilizing organic groups can be prepared by the reduction of the corresponding substituted paranitroanilines to diamines. The substituents can be alkoxides, phenoxides, and the like. Diazotization of the paradiamines followed by bromination (copper bromide; Sandmeyer reaction) yields the corresponding substituted paradibromobenzenes. The corresponding Grinard reagents can then be utilized in the nickel-catalyzed polymerization discussed above to give substituted polyphenylenes.

Alternatively, alkoxy- and phenoxy-substituted dihalobenzenes can be prepared by treating bromoterephthalic acid or the corresponding dibromo compound with alkoxides or phenoxides to form the corresponding alkoxide- or phenoxide-substituted teraphthalic acids. The halodecarboxylation by the modified Hunsdieker reaction using mercuric oxide, bromine and visible light, yields the corresponding substituted dibromobenzenes. In the past, these coppercatalyzed ether-forming reactions were executed under rather forcing conditions. However, several variations to the Ullmann ether condensation have been developed which tolerate many functional groups and do not require activating (electron-withdrawing) groups in the electrophilic substrate and proceed under relatively mild reaction conditions.

Polyalkylene oxide or polyphenylene oxide substituents can be added to aryl groups, including phenyl groups, etc., by a diazonium route. For example, a benzene monomer can be prepared from a paradichlorobenzene which is nitrated to yield the corresponding 2-nitro-1,4-dichlorobenzene, reducing the nitrate group to an amine group, and diazotization of the amine groups to yield corresponding p-dichlorobenzenediazonium salt. The diazonium salt is treated with alkoxy alcohols, such as ethoxyethanol (Cellosolve™), 2-(2-ethoxy-ethoxy)ethanol, 2-methoxyethanol, 2-(2-methoxyethoxy)ethanol, and the like, to form the corresponding polyalkaleneoxy-substituted dichlorobenzenes. The diazonium salt is treated with aryl alcohols, such as phenol, phenoxyphenol, poly(phenoxy)phenol, and the like, to form the corresponding polyphenyleneoxy-substituted dichlorobenzenes.

Oligoisoprenyl groups can be added to aryl groups by forming an acetyl derivative of a dibromo aryl starting material, such as the 2-acetyl derivative of paradibromobenzene. The acetyl derivative is then treated with oligoisoprenyllithium, which is prepared from isoprene and t-butyllithium.

The other solubilizing organic groups, such as the polyphenylene sulfide groups, the polyvinyl groups, the polyalkylmethacrylate groups, the polyacrylonitrile groups, the polyvinyl alcohol groups, and the polyvinyl acetate groups, can be added to the monomer units described herein by conventional chemical means, such as anionic polymerization methods. (See "Anionic Polymerization," James E. McGrath, Ed., ACS Symposium Series 166, American Chemical Society, 1981.)

### Example I

### Tetramethyldisilethylene Adduct of 2,5-Dibromoaniline

To a solution of 6.27 (0.025 mole) 2,5-dibromoaniline in 40 ml dry tetrahydrofuran at -78°C are added 30.3 ml of 2.5 M (0.053 mole) of a cooled hexane solution of n-butyl lithium under argon. A solution of 5.55 g (0.025 mole) of 1,2-bis(chlorodimethylsilyl)ethane in 40 ml tetrahydrofuran is slowly added to the mixture. The final mixture is allowed to warm to room temperature and then poured into water. The solution is diluted with ether, and the organic layer is separated. After washing the aqueous layer with additional portions of ether, the combined ethereal extracts are dried and condensed. The product is purified by crystallization.

Poly-(2,5-aniline): To a solution containing 0.61 g (0.025 mole) activated magnesium metal in 30 ml tetrahydrofuran are added 9.83 g (0.025 mole) of the tetramethyldisilethylene adduct of 2,5-dibromoaniline under argon. After stirring the mixture at room temperature for one hour, 0.050 g (0.00018 mole) NiCl₂ bpy (2,2'-bipyridine) is added to the soluton. The final mixture is heated and allowed to reflux for 24 hours before being poured into 250 ml ethanol. The precipitate that forms is collected by centrifugation using water as a wash. The solid material is then allowed to reflux in a dilute hydrochloric acid/ethanol solution. The final polymer precipitate is collected by filtration and dried in a vaccum to yield poly-(2,5-aniline).

### Example II

### 2,5-Dichlorophenyl Dimethyloctylsilyl Ether

To a solution of 3.75 g (0.023 mole) 2,5-dichlorophenol in 30 ml N,N-dimethylformamide are added 5.58 g (0.082 mole) imidizole and 16.6 ml (0.070 mole) chlorodimethyloctyl silane under argon. After stirring at room temperature for two hours, the mixture is diluted with an aqueous saturated sodium chloride solution and extracted with ether. The combined organic extracts are dried and condensed. The product is purified by column chromatography. Poly-(2,5-phenol): To a solution containing 0.61 g (0.025 mole) activated magnesium metal in 30 ml dry tetrahydrofuran are added 8.33 g (0.025 mole) 2,5-dichlorophenyl(dimethyloctyl)silyl ether under argon. After stirring at room temperature for one hour, 0.050 g (0.00018 mole) NiCl₂ bpy is added to the solution. The final mixture is heated and allowed to reflux for 24 hours before being poured into 250 ml ethanol. The precipitate that forms is collected by centrifugation using water as a wash. The solids are then stirred with a dilute hydrofluoric acid solution in aqueous acetonitrile for 48 hours. The final precipitate is collected by filtration and dried in a vacuum to yield poly-(2,5-phenol).

### Example III

### 1,4-Dibromo-2-(oligo-alpha-methylstyrene)-benzene

A solution of 3.3 g dibromobenzylbromide (0.01 mole) dissolved in 500 ml methylene chloride/methylcyclohexane is cooled to minus 50°C. Ten (10) ml of a 1M solution of boron trichloride in hexanes is added. 23.6 g (0.2 mole) of the monomer alpha-methylstyrene are then added slowly and continuously. After six hours, the reaction is quenched with methanol, and the oligomer (oligo-alpha-methylstyrene) precipitated by pouring the solution into methanol. Each dibromobenzene monomer will have a side chain of an average length of about 20 styrene units (MW 2000). Different-length side chains may be prepared by adding different ratios of styrene to dibromobenzylbromide.

### Example IV

### 1,4-Dibromo-2-(oligoisobutyl vinyl ether)-benzene (quasi-living cationic polymerization)

The dibromobenzyl cation is prepared by adding 3.4 g silver hexafluoroantimonate (AgSbF₆) to a cold (-70°C) solution of 3.3 g (0.01 mole) 2,5-dibromobenzylbromide, in dichloromethane. Isobutyl vinyl ether (50 g [65 ml, 0.5 mole]) is introduced slowly and continuously. The reaction is quenched and the oligomer (oligoisobutyl vinyl ether) recovered by the addition of alcohol. Other non-limiting examples of side chains which can be produced by quasi-living cationic polymerization include: oligomethyl vinyl ether, oligoisobutene, oligo-p-t-butylstyrene, oligoindene, and oligostryene.
2,5-Dibromobenzylbromide: 33 g (0.1 mole) 2,5-dibromo toluene is placed in a 100 ml three-necked flask, fitted with a reflux condenser, a sealed mechanical stirrer, and a separatory funnel with the stem reaching nearly to the bottom of the flask. The flask is illuminated with two 300-watt tungsten lamps during the reaction. The flask is heated in an oil bath to 150°C, and 18.4 g (5.9 ml, 0.115 mole) bromine is added over two hours. The mixture is stirred for an additional 10 minutes, and the contents, while still liquid, are poured into a 500 ml round-bottom flask containing 300 ml of hot light petroleum ether and 2 g decolorizing carbon. A reflux condenser is attached, and the mixture is heated to reflux until the material dissolves, then rapidly filtered through a pre-heated Buchner funnel. The filtrate is cooled and washed with cold light petroleum.

### Example V

### Co-polymerization of 1,4-dibromo-2-(oligo-alpha-methylstyrene)-benzene and 1,4-dibromobenzene (copolymer product)

To a solution containing 0.029 g (0.020 mole) magnesium powder (which is activated by washing in dilute HCl and then water, dried, and then stirred in the presence of iodine overnight) in 10 ml tetrahydrofuran is added a solution of 2.0 g (0.001 mole) 1,4-dibromo-2-(oligo-alphamethylstyrene)-benzene and 4.7 g (0.02 mole) 1,4-dibromobenzene in 30 ml tetrahydrofuran under argon. After stirring the mixture at room temperature for one hour, 0.050 g (0.00018 mole) NiCl₂ bipyridine is added to the solution. The final mixture is heated and allowed to reflux for 24 hours. Any solid p-polyphenylene is removed by filtration. The filtrate is poured into 200 ml of ethanol and the copolymer product precipitated. The copolymer product is collected, washed with water, and dried.

### Example VI

The copolynerization of 1,4-dibromo-2-(oligoisobutyl vinyl ether) benzene and 1,4-dibromobenzene is accomplished in a manner similar to Example V above.

### Example VII

Poly-p-phenylene-co-2-oligoisoprenyl-1,4-phenylene 2'-acetyl-4,4"-dibromoterphenyl: To 3.8 g (0.01 mole) 4,4"-dibromoterphenyl in 200 ml nitrobenzene is added 0.86 g (0.011 mole) acetyl chloride and 1.46 g (0.011 mole) aluminum trichloride. The mixture is heated to 80°C under inert atmosphere for three hours. The mixture is cooled to room temperature and washed with 1 m HCl. The organic layer of 2'-acetyl-4,4"-dibromoterphenyl is separated and the solids filtered and washed with several portions of ethanol, and dried.
Semitelechelic polyisoprene; 4,4"-dibromo-2'-oligoisoprenylterphenyl: A solution of living oligoisoprenyllithium is prepared following S. Dumas, J. Sledz and F. Schue, "Anionic Polymerization," J. E. McGratb, Ed., ACS Symposium Series 166, Chapter 29, pp. 463-475, 1981. To a. solution of isoprene (0.7 mmole) in 1 liter cyclohexane held at 18°C is added t-butyl lithium (0.4 mmole). After four hours, the reaction is terminated by adding 2'-acetyl-4,4"-dibromoterphenyl (0.05 mmole). The solvent is removed and the solid 4,4"-dibromo-2'-oligoisoprenylterphenyl collected.
Poly-p-phenylene-co-2-oligoisoprenyl-1,4-phenylene: A solution containing 0.029 g (0.020 mole) magnesium powder (which is activated by washing in dilute HCl and then water, dried, and then stirred in the presence of iodine overnight) in 10 ml tetrahydrofuran is added to a solution of 1.0 g (0.001 mole) 4,4"-dibromo-2'-oligoisoprenylterphenyl and 4.7 g (0.02 mole) 1,4-dibromobenzene in 50 ml tetrahydrofuran under argon. After stirring the mixture at room temperature for one hour, 0.050 g (0.0018 mole) NiCl₂ bipyridine is added to the solution. The final mixture is heated and allowed to reflux for 24 hours. Any solid p-polyphenylene is removed by filtration. The filtrate is poured into 200 ml ethanol and the poly-p-phenylene-co-2-oligoisoprenyl-1,4-phenylene polymer precipitated. The polymer is collected, washed with water, and dried.

### Example VIII

### Poly-p-(N,N-dimethylamidophenylene)

Dry nickel chloride (60 mg, 0.46 mmol), triphenylphosphine (0.917 g, 3.5 mmol), 2,2'-bipyridine (64.7 mg, 0.41 mmol), sodium iodide (0.39 g, 1.44 mmol), and zinc powder (0.92 g, 14.1 mmol) were placed into a 100 ml round-bottom flask. The flask and its contents were heated to 50°C for 90 minutes under dynamic vaccum to remove trace water. Evacuation was discontinued, and argon was admitted to the flask. Dry dimethyl formamide (DMF) (8 ml) was added, and the temperature was raised to 80°C. Within 5 minutes, the mixture turned a deep-red color. After stirring for 20 minutes under argon, a solution of 2,5-dichlorobenzamide (2.016 g, 9.1 mmol) in DMF (5 ml) was added. After 2 hours, the mixture was cooled to room temperature, then poured into 200 ml of 15% aqueous HCl and extracted with benzene. The product, as a suspension in benzene, was washed with 5% HCl. Dichloromethane was added to the thick, white benzene suspension to give a slightly cloudy solution, which was separated from the remaining water and taken to dryness on a rotary evaporator to give 0.5 g of poly-p-(N,N-dimethylamidophenylene), a white powder.

## Claims

1. A polymer comprising a backbone of at least 25 monomer units comprising:
(a) a plurality of paraphenylene monomer units joined together by carbon-carbon covalent bonds wherein at least about 95% of the bonds are substantially parallel, the polymer and its monomer starting materials being soluble in a common solvent system; and
(b) a plurality of solubilizing organic groups pendant from the monomers, the number and size of the solubilizing organic groups being sufficient to render the polymer soluble in the polymerization solvent system.

2. The polymer according to Claim 1 wherein the molecular-weight fraction of the solubilizing organic groups to the whole polymer is from about 30% to about 95%.

3. The polymer according to Claim 1 or Claim 2 wherein the solubilizing organic groups are alkyl, aryl, alkaryl, aralkyl, alkoxy, alkyl amide, aryl amide, polyalkeneoxy, polyphenylene oxide, polyphenylene sulfide, poly(phenoxyphenyl ketone), polyvinyl chloride, polyalkylmethacrylate, polyacrylonitrile, polyvinyl alcohol, polyvinyl acetate, perfluoroalkyl, perfluoroalkoxy, polyester, polyimide, polyamide, and poly(phenoxyphenyl ketone).

4. The polymer according to Claim 1 or Claim 2 comprising a backbone having an average molecular weight of at least 7,600.

5. The polymer according to Claim 1 or Claim 2 wherein the average molecular weight of the polymer is at least about 10,850.

6. The polymer according to Claim 1 wherein a solubilizing organic group is appended to each of the paraphenylene units, the solubilizing organic group being a N,N-dimethylamido group.

## Patentansprüche

1. Polymer mit einem Gerüst aus mindestens 25 Monomereinheiten, welches aufweist:
a) mehrere Paraphenylenmonomereinheiten, die über kovalente Kohlenstoff-Kohlenstoff-Bindungen miteinander verbunden sind, wobei mindestens etwa 95 % der Bindungen im wesentlichen parallel sind, wobei das Polymer und seine Ausgangsmonomere in einem üblichen Lösungsmittelsystem löslich sind, und
b) mehrere solubilisierende organische Gruppen, die an den Monomeren hängen, wobei Anzahl und Größe der solubilisierenden organischen Gruppen ausreichen, um das Polymer in dem Polymerisations-Lösungsmittelsystem löslich zu machen.

2. Polymer nach Anspruch 1, bei dem der Molekulargewichtsanteil der solubilisierenden organischen Gruppen am Gesamtmolekulargewicht des Polymers zwischen etwa 30 und etwa 95 % liegt.

3. Polymer nach Anspruch 1 oder 2, bei dem die solubilisierenden organischen Gruppen Alkyl, Aryl, Alkaryl, Aralkyl, Alkoxy, Alkylamid, Arylamid, Polyalkenoxy, Polyphenylenoxid, Polyphenylensulfid, Poly(phenoxyphenylketon), Polyvinylchlorid, Polyalkylmethacrylat, Polyacrylnitril, Polyvinylalkohol, Polyvinylacetat, Perfluoralkyl, Perfluoralkoxy, Polyester, Polyimid, Polyamid und Poly(phenoxyphenylketon) sind.

4. Polymer nach Anspruch 1 oder 2, aufweisend ein Gerüst mit einem mittleren Molekulargewicht von mindestens 7.600.

5. Polymer nach Anspruch 1 oder 2, dessen mittleres Molekulargewicht mindestens etwa 10.850 ist.

6. Polymer nach Anspruch 1, bei dem an jeder der Paraphenyleneinheiten eine solubilisierende organische Gruppe hängt, wobei die solubilisierende organische Gruppe eine N,N-Dimethylamidgruppe ist.

## Revendications

1. Polymère comprenant un squelette d'au moins 25 unités monomères, comprenant :
(a) une pluralité d'unités monomères paraphénylène liées les unes aux autres par des liaisons covalentes carbone-carbone dans lesquelles au moins 95% des liaisons sont sensiblement parallèles, le polymère et ses matières de départ monomères étant solubles dans un système solvant commun ; et
(b) une pluralité de groupes organiques solubilisateurs greffés sur les monomères, le nombre et la taille des groupes organiques solubilisateurs étant suffisants pour rendre le polymère soluble dans le système solvant de polymérisation.

2. Polymère selon la revendication 1, dans lequel le rapport de la masse moléculaire des groupes organiques solubilisateurs sur le polymère entier est d'environ 30% à environ 95%.

3. Polymère selon la revendication 1 ou la revendication 2, dans lequel les groupes organiques solubilisateurs sont des groupes alcoyle, aryle, alkaryle, aralcoyle, alkoxy, alcoylamide, arylamide, polyalcène-oxy, oxyde de polyphénylène, sulfure de polyphénylène, poly(phénoxyphényl-cétone), chlorure de polyvinyle, polyméthacrylate de méthyle, polyacrylonitrile, alcool de polyvinyle, acétate de polyvinyle, perfluoroalcoyle, perfluoroalkoxy, polyester, poly-imide, polyamide, et poly(phénoxyphényl-cétone).

4. Polymère selon la revendication 1 ou la revendication 2, comprenant un squelette ayant un poids moléculaire moyen d'au moins 7.600.

5. Polymère selon la revendication 1 ou la revendication 2, dans lequel le poids moléculaire moyen du polymère est d'au moins 10.850 environ.

6. Polymère selon la revendication 1, dans lequel un groupe organique solubilisateur est rattaché à chacune des unités paraphénylène, le groupe organique solubilisateur étant un groupe N,N-diméthylamide.
